Europäisches Patentamt

European Patent Office  (11) Publication number: **0 003 791**

Office européen des brevets  **A1**

(12) **EUROPEAN PATENT APPLICATION**

(21) Application number: **79100405.4**

(22) Date of filing: **12.02.79**

(51) Int. Cl.²: **A 63 C 9/20**
**F 16 B 2/00**

(30) Priority: **21.02.78 IT 2048178**

(43) Date of publication of application:
**05.09.79 Bulletin 79/18**

(84) Designated contracting states:
**CH DE FR SE**

(71) Applicant: **Pronzati, Attilio**
**Via Mazzini, 16**
**I-20010 Vanzago (Milan)(IT)**

(72) Inventor: **Pronzati, Attilio**
**Via Mazzini, 16**
**I-20010 Vanzago (Milan)(IT)**

(74) Representative: **Racheli, Adele**
**Via San Michele del Carso, 4**
**I-20144 (Milan)(IT)**

(54) **A lever device for clamping the ski-boot toe to the front bracket for the attack or connection to long distance ski.**

(57) A lever device for clamping the ski boot in the front bracket of the attack or connection for a long distance ski, wherein the stakes (21) set in the bracket for the front attack or connection of the boot to the ski are secured on an upper cross piece of the attack or connection clamping lever (12), and particularly descend from top to bottom in the lever closing movement and penetrate into the holes (22) suitably arranged in the upper layer of the front extension (18) of the long distance boot sole (19), so that in the final stride movement, when the sole deflects, the stakes (21) are clamped in the holes (22) of the upper layer compressed by the sole, assuring a more intimate coupling between the boot toe and ski.

FIG.1

EP 0 003 791 A1

"A LEVER DEVICE FOR CLAMPING THE SKI-BOOT TOE TO THE FRONT
BRACKET FOR THE ATTACK OR CONNECTION TO LONG DISTANCE SKI".

———

This invention relates to a lever device for clamping the long distance ski-boot toe, comprising holes at the projecting front portion of the sole, having fastening points or nails penetrating therein, said boot toe being retained in place by a lever clamping device.

Long distance skiing sport, as widely practised in northern countries, has developed and become fashionable also in our mountain zones, where the possibility exists of covering some kilometers of flat country, frozen lakes and snow-covered roads. For this sport, the front attack or connection of the boot to the ski has been somewhat modified over the conventional design, because of the occurring necessity of anchoring the sole toe, as extended by a projecting tongue or strip, on a plurality of stakes (generally two or three) for avoiding longitudinal movements of the boot on the ski during the stride. The anchoring stakes have been hitherto secured on the end plane of the front bracket attached to the ski and are therefore projecting from bottom to top; thus, the forward end of the sole is provided with notches or holes at the stakes, so as to enter the same. This device has hitherto provided good results, while suffering from some disadvantages, such as the difficulty of inserting the boot toe in the bracket and the stakes in the notches or holes in the projecting tongue or strip of the sole; moreover, the notches or holes occupied by the stakes would tend to widen or spread out during use in that the flexure of the sole during the stride produces at the end of each step a longitudinal elongation of the hole permitting a mutual displacement between the boot and attack or connection, causing a resulting stress and yield in the tongue or strip projecting from the sole on the hole line with the risk of settlings and breakages.

It is the object of the present invention to provide an attack or connection for long distance boot, wherein the life of the boot is extended to a maximum degree. The above mentioned object has been accomplished by providing that the stakes anchored in the ski attack or connection are no longer secured to the bracket bottom, but to the upper cross piece for the clamping lever of the attack or connection to the boot toe. In this way the bracket bottom will remain free or clear in order to facilitate the entrance of the boot toe in its housing. The tongue projecting from the sole, has the hooking notches or holes in its upper side; these holes will be penetrated by the projecting stakes entering from the top and downward directed, when the hooking lever is lowered on the boot toe and the projecting stakes insert in the underlying holes or notches. Thus, a reliable and durable coupling is provided, in that the sole flexure in the final movement of the stride would tend to clamp the holes against the stakes, the latter being in the compressed portion of the sole, unlike what was the case in the conventional embodiment. In addition, an improved fastening is provided for the boot to the ski, in that no movement of the stakes relative to the sole is allowed.

The accompanying drawing schematically shows an exemplary embodiment of the device according to the invention.

In the drawing:

Fig. 1 is a partly sectioned side view with the lever at closed condition and stakes threaded from top to bottom into the sole holes or notches with the boot inserted;

Fig. 2 is a view similar to that of Fig. 1, but with the lever at open condition and still with the boot inserted;

Fig. 3 is a rear view of Fig. 1;

Fig. 4 is a top plan view with the lever at closed condition and engaged in the clamping hook; and

Fig. 5 is a sectional view of the front portion of the boot sole secured to the respective stakes when said sole is subjected to maximum flexure.

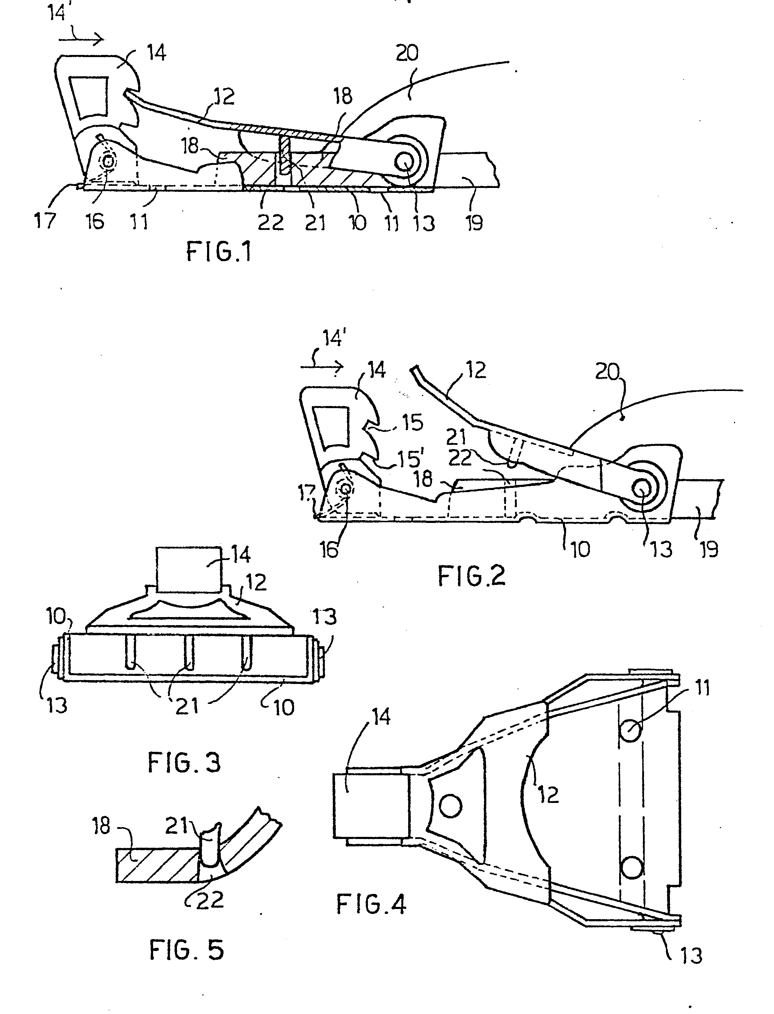

As shown by the drawing, the device comprises a plate 10 provided with holes 11 for fastening thereof to the ski, a bracket lever 12 pivoted at 13 to the rear end, and a hook 14 with two hooking positions 15 and 15' for selective engagement with the front end of lever 12, said hook being in turn pivoted at 16 to the front end of plate 10, and subjeted to the action of a tension spring 17, embracing said pin 16 and tending to urge the hook to clamping position of lever 12 in the direction of arrow 14' (Fig. 2). As far, this clamping plate for the boot toe does not exhibit any important characteristics, while the completely novel and basic feature is in that the stakes 21 for the connection of the extended end 18 of the boot sole 19, instead of being secured to the base plate 10 and projecting from bottom to top, are applied to the underside of lever 12 or a cross piece 12' thereof, and project from top to bottom to penetrate into the holes 22 of the extension 18 of the underlying sole 19, which extension usually projects from the boot toe 20. Thus, it is known that the sole for long distance ski carries a projection serving to connect the boot to the front end of the attack or connection secured on the ski in order to avoid any longitudinal sliding movement of the foot during stride.

Referring now to Fig. 5, it will be seen that the application of stakes 21 to the underside of lever 12, or a cross piece 12' thereof, in order to descend from top to bottom on the extension 18 of sole 19, instead of entering from bottom to top as in conventional devices, is quite important since a stake 21 so arranged would safely clamp the toe as the boot flexure reduces the diameter of the hole or notch therein, so that the stake is clamped. This would substantially extend the duration or life of the boot, or more particularly the life of the projecting portion of the sole, which performs a h ghly important function in regularizing the long distance march without tiring the skier.

From Fig. 5 it can be readily appreciated that a stake arranged at the bottom on the attack or connection would be inserted in a hole with an undue clearance during part of its operation.

C L A I M S

1.    A lever device for clamping the ski boot toe in the front bracket of the attack or connection of a long distance ski, wherein the stakes set in the bracket of the front attack or connection for the boot to the ski are attached on an upper cross piece of the attack or connection clamping lever, and particularly descend from top to bottom in the closing movement of the lever and penetrate into the holes suitably arranged in the upper layer of the front extension of the long distance boot sole, so that in the final stride movement, when the sole deflects, the stakes are clamped in the holes of the upper layer compressed by the sole, thus assuring a more intimate coupling between the boot toe and ski.

2.    A device according to Claim 1, wherein the hooking or connecting stakes of the sole extension operate in blind holes provided in the upper layer of the sole extension, while not involving the lower layer.

FIG.1

FIG.2

FIG.3

FIG.4

FIG. 5

| Category | Citation of document with indication, where appropriate, of relevant passages | Relevant to claim |
|---|---|---|
| X | <u>US - A - 3 874 684</u> (DYSTHE)<br>* Column 2, lines 36 to 40 and figure 3 *<br>-- | 1,2 |
| X | <u>FR - A - 2 290 925</u> (EMERY)<br>* Page 2, lines 14-19 *<br>-- | 1 |
|  | <u>DE - A - 2 633 373</u> (GRETSCH)<br>* Page 24, last paragraph to page 25, first paragraph *<br>-- | 1 |
| P | <u>DE - A - 2 717 362</u> (JOHANSEN)<br>* Page 4, last paragraph *<br>-- | 1 |
|  | <u>NO - A - 66 413</u> (MAGNUSSEN)<br>* Page 1, right-hand column, lines 21 to 27 *<br>-- | 1 |
|  | <u>US - A - 3 979 131</u> (GINTHER)<br>* Column 5, lines 29 to 47 and figures 5-7 *<br>-- | 1 |
|  | <u>FR - A - 2 320 123</u> (PINSONNAULT)<br>* Page 6, line 40 to page 7, line 3<br>---- | 1 |

**DOCUMENTS CONSIDERED TO BE RELEVANT**

**CLASSIFICATION OF THE APPLICATION (Int. Cl.³)**

A 63 C 9/20
F 16 B 2/00

**TECHNICAL FIELDS SEARCHED (Int.Cl.³)**

A 63 C
F 16 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-05-1979 | PESCHEK |

EPO Form 1503.1 06.78